(19) Europäisches Patentamt
European Patent Office
Office européen des brevets

(11) **EP 1 081 186 A1**

(12) **EUROPEAN PATENT APPLICATION**


(43) Date of publication:
**07.03.2001 Bulletin 2001/10**

(51) Int. Cl.[7]: **C08K 5/13**, G03C 1/053
// C08F220/56

(21) Application number: **00202712.6**

(22) Date of filing: **31.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.08.1999 US 374318**



(71) Applicant:
**EASTMAN KODAK COMPANY**
**(a New Jersey corporation)**
**Rochester, New York 14650 (US)**

(72) Inventors:
- **Ghyzel, Peter John,**
**Eastman Kodak Company**
**Rochester, New York 14650-2201 (US)**
- **Fisher, Louis William,**
**Eastman Kodak Company**
**Rochester, New York 14650-2201 (US)**

(74) Representative:
**Parent, Yves et al**
**KODAK INDUSTRIE,**
**Département Brevets,**
**CRT - Zone Industrielle**
**71102 Chalon-sur-Saône Cedex (FR)**


(54) **Stabilized aqueous acrylamide polymer composition and photographic element containing the composition**


(57) An aqueous stabilized composition comprising an acrylamide polymer and a stabilizing compound having the following formula:

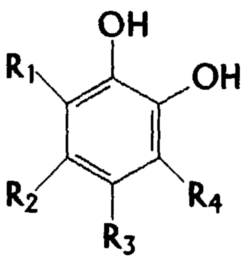

(I)

wherein $R_1$, $R_2$ $R_3$, and $R_4$ are each independently hydrogen, an alkyl group, an aryl group or a solubilizing group.


EP 1 081 186 A1

## Description

The invention relates to an aqueous stabilized composition comprising an acrylamide polymer, a process for stabilizing an aqueous composition comprising an acrylamide polymer, and a photographic element containing the composition.

High molecular weight acrylamide polymer solutions are not stable. With time and/or temperature the molecular weight decreases. This is shown by the decrease of viscosity of the solutions. This effect is well known in the literature, especially with regards to an acrylamide polymer. A number of solutions to this problem have been already described.

The patent application GB 950,022 discloses a stabilized acrylamide polymer composition containing water soluble salts of nitrous acid as inhibitors for the degradation of acrylamide polymers. Specifically disclosed is an acrylamide and acrylamide copolymer composition stabilized by the addition of nitrite ion and optionally iodide ion.

The Japanese Kokai patent application JP 57-159,839 (1982) discloses an aqueous stabilized acrylamide polymer solution containing as a stabilizer, quinolinol, butylhydroxyanisole, methoxyphenol, and/or naphthoquinone.

U.S. Patent No. 4,393,163 and CIP U.S. Patent No. 4,481,316 are directed to a method for stabilizing an acrylamide polymer in a petroleum recovery process. In this method, 2-mercaptobenzoimidazole or its water-soluble salt is added to an aqueous polymer solution containing a predominant amount of acrylamide to inhibit degradation in a petroleum recovery process.

U.S. Patent No. 4,581,405 discloses a process for stabilizing diluted aqueous solutions of high molecular weight polymers of acrylamide or methacrylamide or of the salts of ethylenically unsaturated acids to thermal degradation at above 100°C by using (a) at least 20 ppm of an inorganic sulfur compound, in which the sulfur has as oxidation state of +2 to +5, and (b) at least 20 ppm of a complexing agent for metal ions such as aminopolycarboxylic acids.

US 5,310,774 discloses a stabilized composition against molecular weight degradation comprising a preformed polymer of (meth)acrylamide and containing residual free (meth)acrylamide, and a viscosity-degradation inhibitor that is an ethylenically unsaturated compound that has $LD_{50}$ above 400.

U.S. Patent No. 3,163,619 discloses a process for inhibiting the viscosity degradation of aqueous solutions of high molecular weight polyacrylamide. The polyacrylamide solutions are stabilized by adding organic solvents that are non-solvents for polyacrylamide but are soluble in water. Examples are methanol and isopropanol. This approach is currently used for photographic applications. Conventionally, acrylamide polymer solutions for use in photographic products comprise isopropanol as stabilizer, However, isopropanol is not a very efficient stabilizer. A large amount of isopropanol is required to give adequate stability of the acrylamide polymer solution. Isopropanol creates a volatile organic emission into the environment when these polymers are coated and subsequently dried during their incorporation, into photographic products.

There is a need for a stabilized acrylamide polymer composition comprising an effective stabilizer inhibiting the viscosity degradation of the composition and avoiding volatile organic emission into the environment. There is also a need for a stabilized acrylamide polymer composition comprising an effective stabilizer that is photographically compatible.

These and others objects are achieved by the present invention, which provides an aqueous stabilized composition comprising an acrylamide polymer and a stabilizing, compound having the following formula:

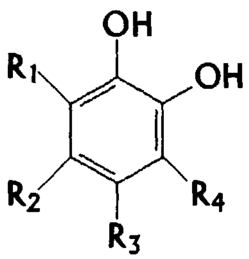

(I)

wherein $R_1$, $R_2$ $R_3$, and $R_4$ are each independently hydrogen, an alkyl group, an aryl group or a solubilizing group.

The invention also relates to a process for stabilizing an aqueous composition containing an acrylamide polymer which comprises adding to the composition a stabilizing compound having the formula

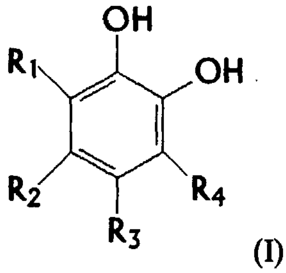

(I)

wherein $R_1$, $R_2$ $R_3$, and R4 are each independently hydrogen, an alkyl group, an aryl group or a solubilizing group.

Then, the invention relates to a photographic element comprising a support having thereon an image forming layer and comprising an aqueous stabilized composition comprising an acrylamide polymer and a stabilizing compound having the formula:

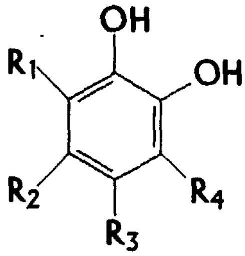

(I)

wherein $R_1$, $R_2$ $R_3$, and $R_4$ are each independently hydrogen, an alkyl group, an aryl group or a solubilizing group.

The compound of formula (I) has been found efficient to stabilize an aqueous composition comprising acrylamide polymer. The addition of this compound in the composition inhibits the viscosity degradation. Further, the composition of the invention reduces substantially volatile organic emission when incorporated in a photographic element.

Other and further objects of the invention will appear from the description of the present invention.

The composition of the invention is an aqueous composition comprising an acrylamide polymer. Acrylamide polymers useful in the composition of the invention are acrylamide homopolymer, copolymers containing a predominant amount of acrylamide moieties, or mixtures thereof. The copolymers include those obtained by copolymerization, with acrylamide of any suitable alkali metal or ammonium salt of a sulfonic acid containing monomers. They also include those obtained by copolymerization with acrylamide of any suitable water soluble unsaturated monomers including alpha, beta-ethylenically unsaturated hydrocarbons such as ethylene, propylene, styrene, and the like; vinyl esters such as vinyl acetate, vinylpropionate, vinyl butyrate, and the like, vinyl ethers such as methyl vinyl ether, ethyl vinyl ether and the like; acrylic and methacrylic acids, esters and amides including acrylic acid, methacrylic acid, ethyl acrylate, methylmethacrylate, methacrylamide, 2-acetoacetoxyethyl methacrylate, methacryloyloxyethylaceto-ace-amide, thiapentyl acrylate, thiapentyl methacrylate, N-(3-thiapentyl)methacrylamide; vinyl esters, ketones, andamides, including vinyl acetate, vinyl propionate, vinylpyrrolidone, N-vinylacetamide, N-methyl-N-vinylaceta-mide, and the like and mixtures thereof. Preferred are copolymers with acrylamide and/or methacrylamide. Most preferred are poly(salt of 2-acrylamido-2-methylpropane sulfonic acid, co acrylamide) where the acrylamide content of the polymer is less than 100% based on the polymer weight, preferably where the acrylamide content of the polymer is 0 % to 50 %, most preferably 0 to 20 %. For example, a polyacrylamide can be poly(2-acrylamido-2-methylpropane sulfonic acid, sodium salt). It can be a copolymer of 2-acrylamido-2-methylpropane sulfonic acid, sodium salt and acrylamide, containing 20 % of acrylamide based on the weight of the copolymer.

According to the invention, the composition preferably exhibits an inherent viscosity (I.V) of at least 1, preferably at least 1.5.

The stabilizing compound useful in the present invention is a compound having the formula I above. According to a preferred embodiment, when $R_1$ $R_2$ $R_3$ and $R_4$ independently, are an alkyl group, the alkyl group preferably contains from 1 to 12 carbon atoms, preferably 1 to 6 carbon atoms. For example, $R_1$, $R_2$, $R_3$ and $R_4$ can be methyl, ethyl, propyl, butyl, etc.

According to one embodiment, the stabilizing compound has the formula:

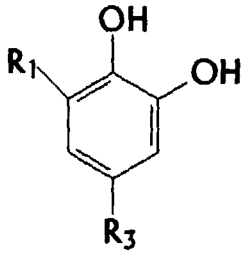

(II)

wherein $R_1$ and $R_3$ are as defined above. According to a specific embodiment, $R_1$ and $R_3$ independently, are hydrogen, an alkyl group from 1 to 12 carbon atoms, and more preferably 1 to 6 carbon atoms, or a sulfonic acid salt group.

The stabilizing compounds include compounds such as t-butyl catechol; methyl catechol, salt of 6,5-dihydroxy-1,3-benzene disulfonic acid, 1, 2 dihydroxybenzene, etc.

The stabilizing compounds useful in the invention are non-volatile so that they are not released into the environment during the manufacture of photographic elements. Further, these stabilizing compounds are very efficient. Even when present in a small amount by weight relative to the weight of the acrylamide polymer, the stabilizing compound provides adequate stabilization. According to the invention, the stabilizing compound is present in an amount up to 5 %, based on the acrylamide polymer weight, preferably less than 2 %.

When reference in this application is made to a particular group, unless otherwise specifically stated, the group may itself be unsubstituted or substituted with one or more substituents (up to the maximum possible number). For example, "alkyl" group refers to a substituted or unsubstituted alkyl group. The substituent may be itself substituted or unsubstituted. Generally, unless otherwise specifically stated, substituents include any substituents, whether substituted or unsubstituted, which do not destroy properties necessary for the photographic utility and stability. Examples of substituents include known substituents, such as : halogen, for example, chloro, fluoro, bromo, iodo; alkoxy, particularly those "lower alkyl" (that is, with 1 to 6 carbon atoms, for example, methoxy, ethoxy; substituted or unsubstituted alkyl, particularly lower alkyl (for example, methyl, trifluoromethyl); thioalkyl (for example, methylthio or ethylthio), acid or acid salt groups and others known in the art. Alkyl substituents may specifically include "lower alkyl" (that is, having 1-6 carbon atoms), for example, methyl, ethyl, and the like. Further, with regard to any alkyl group, it will be understood that these can be branched or linear and include ring structures.

The composition of the invention is usually used as a thickener of an aqueous solution, particularly of hydrophilic colloid solutions. Suitable hydrophilic colloid materials include both naturally occurring substances such as proteins, protein derivatives, cellulose derivatives--e.g., cellulose esters, gelatin--e.g., alkali-treated gelatin (cattle bone or hide gelatin) or acid-treated gelatin (pigskin gelatin), gelatin derivatives--e.g., acetylated gelatin, phthalated gelatin and the like, polysaccharides such as dextran, gum arabic, zein, casein, pectin, collagen derivatives, collodion, agar-agar, arrowroot, albumin and the like. Hydrophilic colloid solutions are disclosed in details in Research Disclosure, Item 36544, September 1994, section II.A. According to a specific embodiment, the composition of the invention further contain hydrophilic colloid materials, preferably gelatin or gelatin derivatives.

The composition of the invention can be used in any known photographic material, such as black and white materials, single color materials, or multicolor materials. A typical photographic material comprises a support having thereon at least one light sensitive layer, conventionally containing silver halide emulsion. The material can contain additional layers, such as filter layers, interlayers, overcoat layers, subbing layers, and the like. All of these can be coated on a support that can be transparent or reflective (for example, a paper support). The composition of the invention can be used in any of these layers.

According to one embodiment, the photographic element comprises a composition comprising poly(salt of 2-acrylamido-2-methylpropane sulfonic acid co acrylamide) and a stabilizer selected from the group consisting of t-butyl catechol and a salt of 4, 5 dihydroxy-1,3-benzene-disulfonic acid.

Photographic elements and process for obtaining photographic elements are disclosed in Research Disclosure, Item 36544, September.

Next, a more detailed description of the invention will be made. However, it is to be understood that the present invention is not limited to the following examples.

EXAMPLES

In the following examples the inherent viscosities of the solutions were measured in a capillary viscometer at a polymer concentration of 0.25 g/dl using aqueous 0.1M sodium sulfate as the solvent. The measurements were carried out at a temperature of 25 degrees C. Inherent viscosity (I.V.) is calculated as:

I.V. = $\ln(t / t_0)/c$ where t is the polymer solution flow time through the capillary, $t_0$ is the solvent flow time, and c is the polymer concentration.

EXAMPLE 1

An aqueous solution containing 15 % (based on the total weight of the solution) of the copolymer of 2-acrylamido-2-methylpropane sulfonic acid, sodium salt and acrylamide (20% weight based on the copolymer weight) was held at 50°C during 54 days. The inherent viscosity (I.V) of the solution was measured at times as indicated in Table 1. The results are reported in Table 1 below.

EXAMPLE 2

In an aqueous solution as disclosed in example 1 was added 0.33 weight percent of tert-butyl catechol based on the weight of the polymer. The solution was held at 50°C during 54 days. The inherent viscosity of the solution was measured at times as indicated in Table 1. The results are reported in Table 1 below.

EXAMPLE 3

In an aqueous solution as disclosed in example 1 was added 3.3 weight percent of isopropanol based on the weight of the polymer. The solution was held at 50°C during 54 days. The inherent viscosity of the solution was measured at times as indicated in Table 1. The results are reported in Table 1 below.

EXAMPLE 4

In an aqueous solution as disclosed in example 1 was added 0.33 weight percent of tert-butyl catechol based on the weight of the polymer. The solution was held at 50°C during 28 days. The inherent viscosity of the solution was measured at times as indicated in Table 1. The results are reported in Table 1 below.

EXAMPLE 5

In an aqueous solution as disclosed in example 1 was added 0.3 weight percent of 4,5 dihydroxy-1,3-benzene-disulfonic acid disodium salt (DHBSA) based on the weight of the polymer. The solution was held at 50 °C during 28 days. The inherent viscosity of the solution was measured at times as indicated in Table 1. The results are reported in Table 1 below.

EXAMPLE 6

In an aqueous solution as disclosed in example 1 was added 1.3 weight percent of 4,5 dihydroxy-1,3-benzene-disulfonic acid disodium salt based on the weight of the polymer. The solution was held at 50 °C during 28 days. The inherent viscosity of the solution was measured at times as indicated in Table 1. The results are reported in Table 1 below.

EXAMPLE 7

In an aqueous solution as disclosed in example 1 was added 2.5 weight percent of 4,5 dihydroxy-1,3-benzene-disulfonic acid disodium salt based on the weight of the polymer. The solution was held at 50 °C during 28 days. The inherent viscosity of the solution was measured at times as indicated in Table 1. The results are reported in table 1 below.

Table 1 shows the percentage change in Inherent Viscosity for Polymer Solutions held at 50°C over time. Initial Inherent Viscosities ranged from 2.00 to 2.12 dL/g.
Percentage Change was defined with the following equation:

$$\%\,Change = \frac{I.V.(t) - I.V.(0)}{I.V.(0)} \times 100$$

where $I.V.(0)$ is the initial inherent viscosity and $I.V.(t)$ is the inherent viscosity of the polymer at time t.

Table 1

| Change in I.V. (%) over time (50° C keeping) | | | | | | |
|---|---|---|---|---|---|---|
| Example | additive | init. | 1 day | 3 days | 28days | 54days |
| 1 | none (control) | 0% | -5.2% | -13.2% | -25.0% | -26.9% |
| 2 | 0.33% tert-butyl catechol | 0% | -1.4% | -1.0% | - | -2.9% |
| 3 | 3.3% isopropanol | 0% | -1.9% | -2.9% | - | -3.3% |
| 4 | 0.33% tert-butyl catechol | 0% | - | - | -2.0% | - |
| 5 | 0.3% DHBSA | 0% | - | - | -6.9% | - |
| 6 | 1.3% DHBSA | 0% | - | - | -5.4% | - |
| 7 | 2.5% DHBSA | 0% | - | - | -5.4% | - |

- not available

EXAMPLE 8

An aqueous solution containing 15 % (based on the total weight of the solution) of the copolymer of 2-acrylamido-2-methylpropane sulfonic acid, sodium salt and acrylamide (20% weight based on the copolymer weight) was held at room temperature during 81 days. The inherent viscosity (I.V) of the solution was measured at times as indicated in Table 2. The results are reported in Table 2 below.

EXAMPLE 9

In an aqueous solution as disclosed in example 8 was added 0.33 weight percent of tert-butyl catechol based on the weight of the polymer. The solution was held at room temperature during 81 days. The inherent viscosity of the solution was measured at times as indicated in Table 2. The results are reported in Table 2 below.

EXAMPLE 10

In an aqueous solution as disclosed in example 8 was added 1.3 weight percent of tert-butyl catechol based on the weight of the polymer. The solution was held at room temperature during 81 days. The inherent viscosity of the solution was measured at times as indicated in Table 2. The results are reported in Table 2 below.

EXAMPLE 11

In an aqueous solution as disclosed in example 8 was added 0.66 weight percent of 4,5 dihydroxy-1,3-benzene-disulfonic acid disodium salt based on the weight of the polymer. The solution was held at room temperature during 81 days. The inherent viscosity of the solution was measured at times as indicated in Table 2. The results are reported in Table 2 below.

EXAMPLE 12

In an aqueous solution as disclosed in example 8 was added 2.5 weight percent of 4,5 dihydroxy-1,3-benzene-disulfonic acid disodium salt based on the weight of the polymer. The solution was held at room temperature during 81 days. The inherent viscosity of the solution was measured at times as indicated in Table 2 by the method of example 1. The results are reported in Table 2 below.

Table 2 below shows the percentage change in Inherent Viscosity for polymer solutions stored at room temperature. Initial Inherent Viscosities range from 1.90 to 2.00 dL/g. The I.V. change is determined as previously defined.

Table 2

| Change in I.V. (%)over time at room temperature. | | | | |
|---|---|---|---|---|
| Example | additive | initial | 30days | 81days |
| 8 | none | 0% | -5.5% | |
| 9 | 0.33% tert-butyl catechol | 0% | - | +0.5% |
| 10 | 1.3% tert-butyl catechol | 0% | - | 0.0% |
| 11 | 0.66% DHBSA | 0% | - | -0.5% |
| 12 | 2.5% DHBSA | 0% | - | -2.1% |

- not available

These examples show the stability of acrylamide polymer solutions containing comparative and inventive stabilizing compounds. Example 1 shows that without the added stabilizing compound, the degradation of the inherent viscosity is observed. The degradation is observed rapidly, especially at 50°C. When 0.33 % of t-butyl catechol is added to an aqueous solution containing 15 % (based on the total weight of the solution) of the copolymer of 2-acrylamido-2-methylpropane sulfonic acid, sodium salt and acrylamide (20% weight based on the copolymer weight), inherent viscosity stability is observed at room temperature and at 50°C equal to or better than ten times the concentration of isopropanol. This shows the efficiency of the stabilizing compounds of the invention. Example 5 shows the efficiency of 0.3% of 4,5 dihydroxy-1,3-benzene-disulfonic acid disodium salt (DHBSA) to inhibit viscosity degradation. At room temperature (22°C), no inherent viscosity change is noted over 81 days in samples stabilized with either of these two stabilizing compounds of the invention.

**Claims**

1. An aqueous stabilized composition comprising an acrylamide polymer and a stabilizing compound having the following formula:

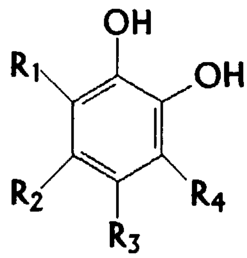

(I)

wherein $R_1$, $R_2$ $R_3$, and $R_4$ are each independently hydrogen, an alkyl group, an aryl group or a solubilizing group.

2. The composition of claim 1 wherein the stabilizing compound has the following formula:

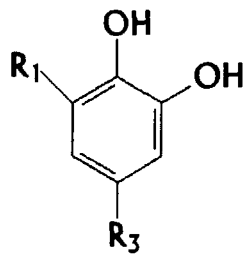

(II)

wherein $R_1$ and $R_3$ are independently hydrogen, an alkyl group from 1 to 12 carbon atoms, or a sulfonic acid salt group.

**3.** The composition of claim 1 wherein the stabilizing compound is present in an amount up to 5 % based on the acrylamide polymer weight.

**4.** The composition of claim 1 wherein the stabilizing compound is selected from the group consisting of t-butyl catechol and a salt of 4, 5 dihydroxy-1,3-benzene-disulfonic acid.

**5.** The composition of claim 1 further comprising a hydrophilic colloid material.

**6.** The composition of claim 1 wherein the polymer is poly(salt of 2-acrylamido-2-methylpropane sulfonic acid co acrylamide) and the stabilizer is selected from the group consisting of t-butyl catechol and a salt of 4, 5 dihydroxy-1,3-benzene-disulfonic acid.

**7.** The composition of claim 2 wherein the stabilizing compound is selected from the group consisting of t-butyl catechol and a salt of 4, 5 dihydroxy-1,3-benzene-disulfonic acid.

**8.** A process for stabilizing an aqueous composition containing an acrylamide polymer which comprises:

adding to the composition a stabilizing compound having the formula

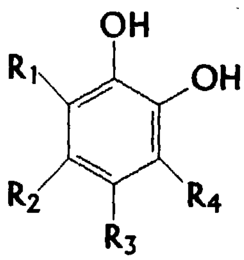

(I)

wherein $R_1$, $R_2$ $R_3$, and R4 are each independently hydrogen, an alkyl group, an aryl group or a solubilizing group.

**9.** A photographic element comprising a support having thereon an image forming layer and comprising an aqueous stabilized composition comprising an acrylamide polymer and a stabilizing compound having the formula:

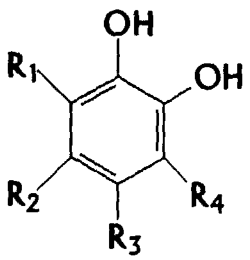

(I)

wherein $R_1$, $R_2$ $R_3$, and $R_4$ are each independently hydrogen, an alkyl group, an aryl group or a solubilizing group.

**10.** The element of claim 9 wherein the stabilizing compound has the following formula:

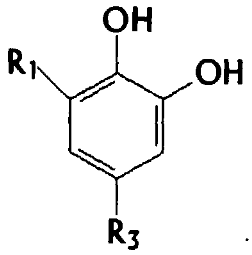

(II)

wherein $R_1$ and $R_3$ are independently hydrogen, an alkyl group from 1 to 12 carbon atoms, or a sulfonic acid salt group.

European Patent Office

# EUROPEAN SEARCH REPORT

Application Number
EP 00 20 2712

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>A | US 4 440 228 A (SWANSON BILLY L)<br>3 April 1984 (1984-04-03)<br>* column 5, line 47 - column 7, line 30 *<br>* column 11, line 35 - line 57 *<br>* example V; table V *<br>* example IX; table X *<br>* claims 1,5 * | 1-3,8<br><br>6,7 | C08K5/13<br>G03C1/053<br>//C08F220/56 |
| X<br>A | EP 0 301 799 A (EASTMAN KODAK CO ;KODAK LTD (GB)) 1 February 1989 (1989-02-01)<br>* page 6, line 1 - line 14 * | 1,2,4,5,7-10<br>3,6 | |
| X | US 4 762 865 A (GOLD MARVIN H)<br>9 August 1988 (1988-08-09)<br>* column 2, line 8 - line 15 *<br>* column 4, line 13 - line 49 *<br>* column 6, line 1 - line 35 *<br>* column 7; example 3B *<br>* claims 1,12,13,20 * | 1,2,4,7,8 | |
| A | EP 0 446 865 A (PHILLIPS PETROLEUM CO)<br>18 September 1991 (1991-09-18)<br>* page 2, line 26 - page 5, line 39 * | 1-3,8 | **TECHNICAL FIELDS SEARCHED (Int.Cl.7)**<br>C08K<br>C08F<br>G03C |
| D,Y | US 4 581 405 A (MARTISCHIUS FRANZ-DIETER ET AL) 8 April 1986 (1986-04-08)<br>* column 1, line 56 - column 3, line 12 * | 1-4,6-8 | |
| D,Y | PATENT ABSTRACTS OF JAPAN<br>vol. 007, no. 003 (C-143),<br>7 January 1983 (1983-01-07)<br>& JP 57 159839 A (MITSUBISHI KASEI KOGYO KK), 2 October 1982 (1982-10-02)<br>* abstract * | 1-4,6-8 | |

-/--

The present search report has been drawn up for all claims

| Place of search | Date of completion of the search | Examiner |
|---|---|---|
| MUNICH | 21 November 2000 | Lindner, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 00 20 2712

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 317 759 A (KANDA SHOICHI ET AL) 2 March 1982 (1982-03-02) * column 1, line 5 - column 4, line 10 * * claims 1-3 * | 1-8 | |
| A | US 4 317 758 A (BRUNING DONALD D) 2 March 1982 (1982-03-02) * column 1, line 4 - column 4, line 32 * | 1-8 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 21 November 2000 | Lindner, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 20 2712

This annex lists the patent family membersrelating to the patent documents cited in the above-mentioned European search report.
The members are as contained in the European Patent Office EDP file on
The European Patent Office is in no way liable for these particulars which are merely given for the purpose of information.

21-11-2000

| Patent document cited in search report | Publication date | Patent family member(s) | Publication date |
|---|---|---|---|
| US 4440228 A | 03-04-1984 | US 4323123 A | 06-04-1982 |
| EP 0301799 A | 01-02-1989 | DE 3885813 D | 05-01-1994 |
| | | DE 3885813 T | 16-06-1994 |
| | | JP 1105943 A | 24-04-1989 |
| US 4762865 A | 09-08-1988 | US 4652388 A | 24-03-1987 |
| | | US 4762875 A | 09-08-1988 |
| EP 0446865 A | 18-09-1991 | US 5100931 A | 31-03-1992 |
| | | AU 622365 B | 02-04-1992 |
| | | AU 7264291 A | 24-10-1991 |
| | | CA 2035420 A | 13-09-1991 |
| | | EG 19751 A | 31-05-1996 |
| | | NO 301438 B | 27-10-1997 |
| | | NZ 237343 A | 27-01-1993 |
| | | TR 25064 A | 01-11-1992 |
| US 4581405 A | 08-04-1986 | DE 3334226 A | 11-04-1985 |
| | | CA 1250069 A | 14-02-1989 |
| | | GB 2148310 A,B | 30-05-1985 |
| | | NO 843784 A | 25-03-1985 |
| JP 57159839 A | 02-10-1982 | JP 1022868 B | 28-04-1989 |
| | | JP 1538056 C | 16-01-1990 |
| US 4317759 A | 02-03-1982 | JP 1431835 C | 24-03-1988 |
| | | JP 56145941 A | 13-11-1981 |
| | | JP 62039622 B | 24-08-1987 |
| US 4317758 A | 02-03-1982 | CA 1164119 A | 20-03-1984 |
| | | EP 0039083 A | 04-11-1981 |
| | | NO 811417 A | 29-10-1981 |

EPO FORM P0459

For more details about this annex : see Official Journal of the European Patent Office, No. 12/82